# EUROPEAN PATENT SPECIFICATION

(11) **EP 1 955 010 B1**
(45) Date of publication and mention of the grant of the patent: **26.08.2015**
(21) Application number: 05823484.0
(22) Date of filing: 29.11.2005
(51) Int. Cl.: G01B 5/14, E01B 35/12

(54) **SYSTEM AND METHOD FOR SIMULTANEOUSLY CONTROLLING AND STORING THE PHYSICAL PARAMETERS DURING THE INTERNAL STRESS ADJUSTMENT OPERATIONS IN THE LONG WELDED RAIL INSTALLATION**
SYSTEM UND VERFAHREN ZUM GLEICHZEITIGEN KONTROLLIEREN UND SPEICHERN DER PHYSIKALISCHEN PARAMETER WÄHREND VORGÄNGEN ZUR REGULIERUNG DER EIGENSPANNUNG VON LANGEN GESCHWEISSTEN SCHIENENANLAGEN
SYSTÈME ET PROCÉDÉ POUR RÉGULER ET STOCKER SIMULTANÉMENT DES PARAMÈTRES PHYSIQUES PENDANT LES OPÉRATIONS DE RÉGLAGE DE CONTRAINTE INTERNE DANS UNE INSTALLATION DE RAILS SOUDÉS DE GRANDE LONGUEUR

(43) Date of publication of application: 13.08.2008
(73) Proprietor: Pisani, Giorgio, 27058 Voghera (PV) (IT)
(72) Inventor: Pisani, Giorgio, 27058 Voghera (PV) (IT)
(74) Representative: Riccardi, Sergio
(86) International application number: PCT/IT2005/000698
(87) International publication number: WO 2007/063557

(56) References cited:
- EP-A- 0 592 031
- FR-A- 2 539 866
- SU-A1- 939 621
- US-A- 5 205 368
- PATENT ABSTRACTS OF JAPAN vol. 1999, no. 11, 30 September 1999 (1999-09-30) -& JP 11 172606 A (WEST JAPAN RAILWAY CO; EIKURA TSUSHIN:KK), 29 June 1999 (1999-06-29)
- PATENT ABSTRACTS OF JAPAN vol. 2003, no. 12, 5 December 2003 (2003-12-05) -& JP 2005 326372 A (ELMES KEISOKU KOGYO KK), 24 November 2005 (2005-11-24)

## Description

The present invention is about a system and a method for simultaneously controlling and storing the physical parameters that change during the internal stress adjustment operations in the installation of the so called "long welded rail" (LWR).

Almost all the operating railways are built with 50 and 60 UNI type rails welded together, with expansion prevented by the sliding resistance opposed by the sleeper and ballast assembly. Therefore, compression or traction stresses occur in the operating rails as the temperature changes. The railway companies set the adjustment temperature for each track section and the rails should not have any internal stress when said temperature is reached. This allows to ensure the tensional balance needed for the railway equipment stability in any environmental condition. The operation for ensuring the tensional balance is called "long welded rail internal stress adjustment operation".

Operatively, the long welded rail internal stress adjustment operations are performed by forcing the rails without constraints, i.e. disconnected from the sleepers, to be mechanically stretched at lower temperatures with respect to the adjustment one, in order to reach the same length caused by the rail heating due to the equivalent thermal head.

The stress adjustment operations are normally performed using devices called rail stretch clamps, able to carry out the calculated mechanical stretches on rail sections having a length up to 864 m. This length is the maximum value used by the Italian railway company, but other railway companies could use different values. The whole rail section is divided in two half-sections, inside which reference "quarters" are fixed; for each quarter, the stretch proportionality with respect to the whole stretch calculated on the rail half-section has to be verified.

At present, the stretch proportionality verification is performed by several properly entrusted persons, who move many times along the whole rail section under adjustment in order to evaluate on sight the displacements of the marks drawn on the rails with respect to the sleepers from which said rails have been temporarily released. The defect detection and the consequent communication to the squads of workmen performing the mechanical release of the rails from their constraints are often ill-timed, due to the time needed for the movement from one checkpoint to another.

Several systems for measuring rail parameters are disclosed in prior art. For example JP11172606 discloses a detector of an undesirable phenomenon: the slippage of clamping devices, i.e. bolts, fastening the rail to sleepers. The device is mounted on a carriage or truck travelling on rails, and at the same time detects the slippage, if any, and the position on the rails where this slippage occurs using a signalling clamping device which has a different shape and stands in specific positions along the length of the rail. The detector is able to indicate where, approximately, and in which interval on the rails, a rail clamping device has slipped. Broadly speaking, this device measures and stores variable physical parameters of the rail like the object of our invention, but, more specifically, it detects the correct position of rail clamping devices in order to signal the rail integrity. Instead, the object of our invention is the accurate measure of the lengthening of a rail section during the internal stress adjustment operations in the long welded rail installation that, for definition, is done without clamping devices and without trains on it.

SU939621 discloses a measuring device for rails, but it measures lateral displacement of a rail, that is rail gauge, or distance between the rails perpendicular to their length.

FR2539866 discloses a device measuring the residual clearance below the "Nabla" type elastic clamping devices.

JP2005-326372 relates to a settlement measuring device and a measuring method of a railway track capable of settlement measurement (that is essentially vertical measurements) of a track bed and a roadbed in the static state wherein a vehicle does not pass and settlement measurement of a rail in the dynamic state at the vehicle passing time.

EP0592031 discloses a system for detecting one or more vehicles, such as a train, on a rail track.

US 5205368 discloses an apparatus and method for measuring vertical forces exerted to a pair of rails, supported by sleepers, by a rail supported vehicle. Said rail have insert therein a force measuring device and the signal is captured remotely from control unit.

So US 5205368 as the other documents describing the closest prior art surveys parameters regarding rails and /or trains passing on rails to preserve the security of the railways. Every documents discloses the way of measure and the survey of different parameters, which as per their physical characteristics, need different instrumentation to be captured , so every evaluation of a determined parameter is an argument to be treated as new for itself and in the context where it is relieved. It is now not of interest and not know how the survey of the parameters presented in the described documents was made, but, in particular, indeed the measure of horizontal internal tensions in correlation with the temperature has never been proposed before and more in particular, the evaluation has been done till now only by sight evaluation.

It is therefore apparent that none of the above documents fulfils the objects of this invention.

It is thus an object of the present invention to provide for a system and a method for simultaneously controlling and storing the physical parameters that change during the internal stress adjustment operations in the installation of the so called long welded rail which allow to simultaneously and remotely control the temperatures and the stretches of said rail during all the stress regulation stages, through a mechanical device, easy to install at predetermined positions on the rail.

The system according to the present invention comprises a remote main processing unit, consisting of a computer provided with a proper interface card according to a preferred embodiment, and one or more mechanical detection devices disposed at predetermined positions on the rail, adapted to survey the temperature and the tensional balance exerted in the rail, connected to the remote main processing unit through a wireless communication system or equivalent system and able to operate at the same time on both rails of a track.

The system and method according to the present invention have the features set forth in independent claims 1 and 11. Further advantageous features of said system are set forth in the dependent claims.

Characteristics and advantages of the invention will be better described in greater detail hereinafter, also with the aid of the annexed drawings, which show illustrative but not limiting embodiments of the main component of the system for simultaneously controlling and storing the rail section physical parameters. Obviously, the same reference numbers in the different figures show the same or equivalent components.
Figure 1 is an axonometric schematic view of a mechanical detection device according to the present invention.
Figure 2 is a side view of the mechanical detection device of Figure 1.

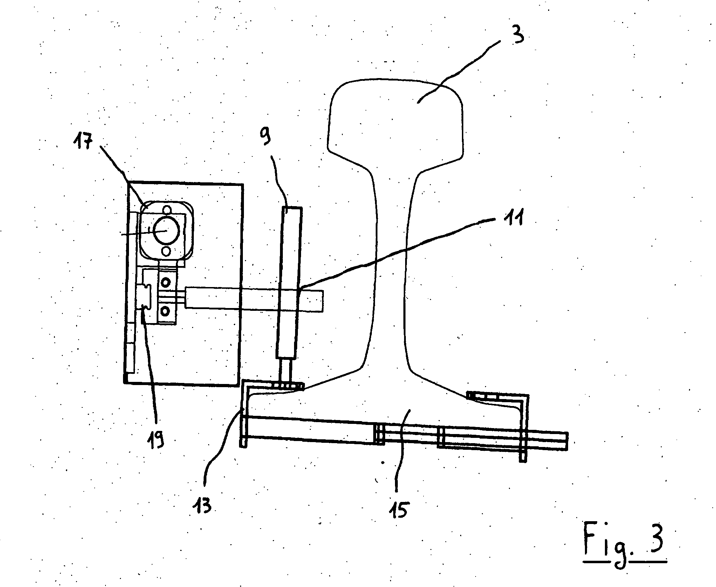

Figure 3 is a side sectional view showing the mechanical detection device of Figure 1 positioned on a rail section.
Figure 4 is a side sectional view showing the mechanical detection device of Figure 1 fastened to a rail sleeper.

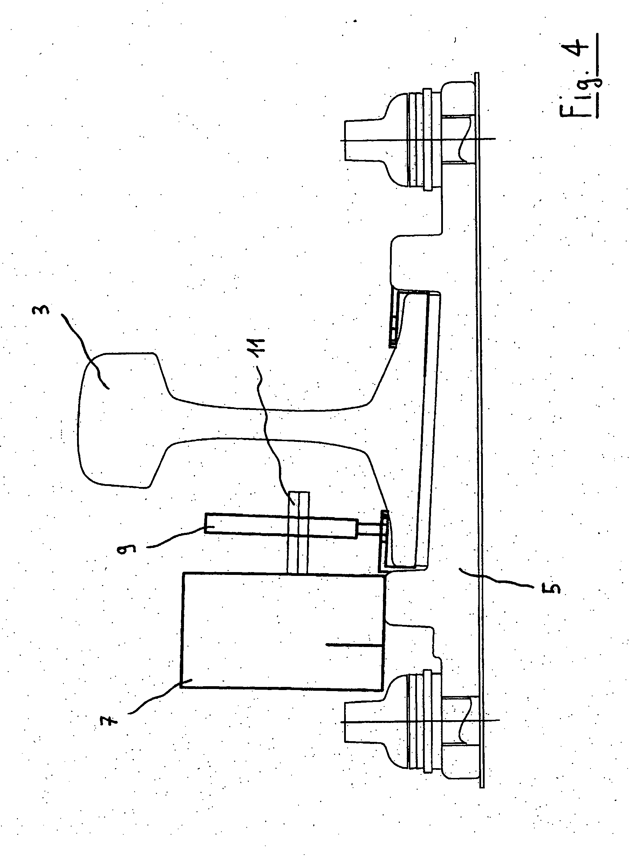

With reference to the Figures of the annexed drawings, an embodiment of a mechanical detection device 1 for checking the variation of the physical parameters (of temperature and/or tension) during the internal stress adjustment operations in the installation of the long welded rail is shown. The purpose of each detection device 1 is to check, during all the release and subsequent stress adjustment stages for a generic rail section 3, all the data related to the longitudinal movements of the rail 3 with respect to the underlying sleepers 5 (Figure 4), completely unbound from said rail 3, as well as to send said data to a remote main processing unit through a proper communication channel. The remote main processing unit can be a computer provided with a proper interface card able to communicate with each detection device 1.

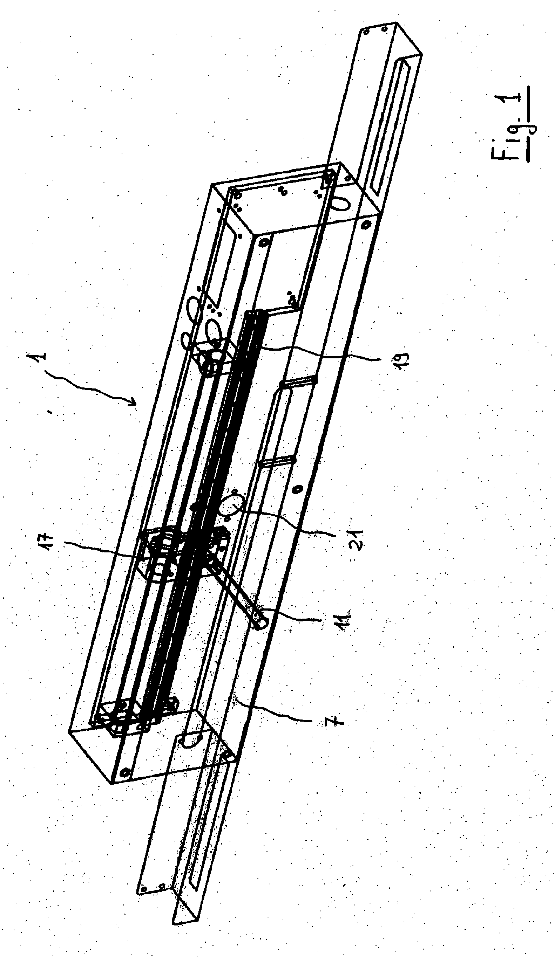

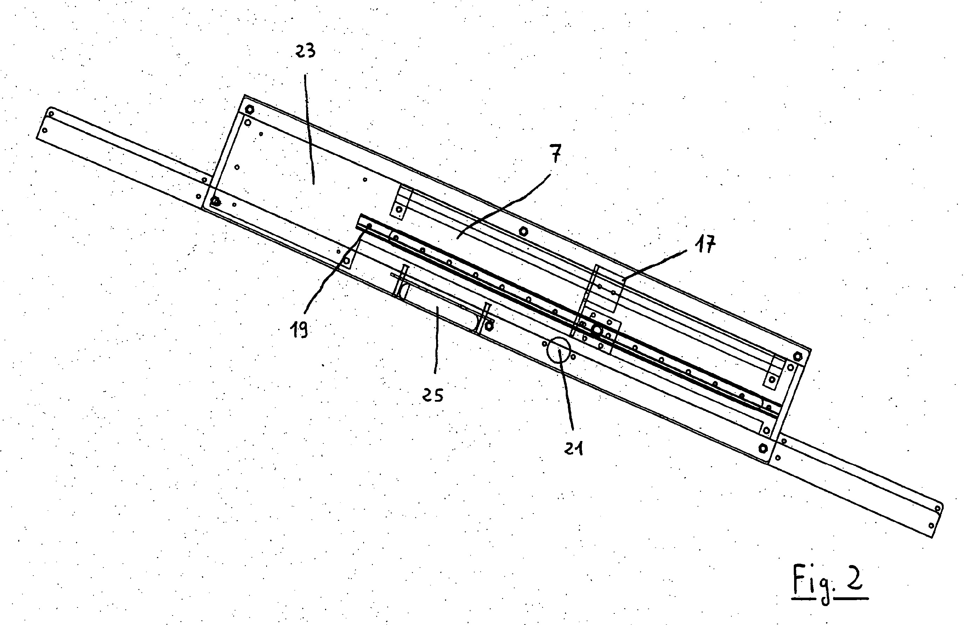

Each detection device 1 is made of two separate components, a main component 7 which contains the detection elements (Figures 1 and 2) and is configured to be fastened to the sleeper(s) 5, and a checking component 9, adapted to be fastened to the rail 3. The main component of the detection device 1 is provided with a mechanical checking bar 11 maintained in permanent contact with the checking component 9 through a spring device.

For example, the checking component 9 can be fastened to the rail 3 through a bracket 13 mounted on the flange 15 of said rail 3, and it is disposed in a substantially vertical position. The checking bar 11 of the main component 7 is substantially horizontal and perpendicular to the development axis of the rail 3. The checking bar 11 is integral with the cursor 17 of an electronic position transducer mounted on the sleepers 5 through a proper fastening element, and it is able to move inside the detection device 1 along a linear slide guide 19.

The position of the checking elements 9 and 11, in physical contact one with the other, has the purpose to detect the longitudinal movements only of the rail 3 with respect to the sleepers 5 without alterations due to other side or vertical displacements imposed by the works.

Furthermore, a proper thermometrical feeler for detecting the temperature of the rail 3, to be disposed in a corresponding housing 21, can be connected to each detection device 1.

The displacement and temperature data detected by the position transducers and the thermometrical feelers respectively are processed by a proper electronic card disposed in the housing 23 of each detection device 1 and subsequently sent, preferably through a wireless communication device integrated in said electronic card, to the remote main processing unit. The operation of all the equipments included in each detection device 1 is ensured by a proper battery pack 25.

Instead of the above described device for checking the rail relative displacement, it is possible to replace the mechanical checking elements and the position transducer of each detection device 1 with other electronic distance measuring equipments as for example laser, radar, infrared, ultrasonic, etc., trained as well on their corresponding checking elements.

Furthermore, the above described detection devices can also be disposed by reversing the position of the checking elements, maintaining as well the same functionality: the detection device 1 connected to the position transducer can be fastened to the rail 3 rather than the sleepers 5, while the checking element 9 can be fastened to one of the sleepers 5.

The electronic card and the battery pack 25 could also be disposed in a stand alone box properly connected with the detection device 1.

The detected temperature data are used in an automatic way by the remote main processing unit to compute the expansion to be imposed to the rail quarters according to the half-sections length.

The visualization of all the detected data allows a single operator to evaluate in real-time the instant when the rails can be considered as completely free from constraints and to start, with a simple command, the adjustment operations with the simultaneous storage of the position data detected by each detection device 1 in said instant. These stored data become a reference for the imposed proportional expansions.

The remote main processing unit keeps on processing in real-time the received data, automatically verifying the expansion proportionality in each rail section, the immobility of the fixed points and the displacements with respect to the operative tolerances.

The operator is thus able to control by himself all the data and to indicate in real-time where the rail shaking activities have to be intensified in order to obtain a true proportionality of the imposed expansions and thus the tension homogeneity.

The remote main processing unit can also automatically store the detected data, allowing the subsequent visualization and printing of the tension adjustment main data which are useful as well to certificate the correct execution of all the operations.

In brief, each apparatus forming the detection system according to the present invention operates as follow. Each detection device 1 detects the rail longitudinal movements since its application on said rail and systematically at each predetermined time interval, detecting as well the rail temperature, if required, through the proper thermometrical feeler. All the detected data are then sent, through a proper communication system, to the remote main processing unit which, in advance:
- receives the input data concerning line, track, rail, train direction and distinction between right and left rail (in ordinary double-track lines, the right rail is the centre line side one, while the left rail is the platform side one, being possible to easily change this setting);
- receives the input data required to define the half-section lengths, the distance between the sleepers and the adjustment temperature;
- computes and automatically inputs the missing data (the progressive kilometres, the length of each half-section measured in meters or in sleeper number, the number of sleepers between two quarters and other data are set);
- receives the input data concerning any fixed point movement detected in previous adjustment operations in order to take them into account in further computations (this value is equal to zero by default).

After each detection device 1 has been positioned and activated, the remote main processing unit performs the following operations for each single rail section:
- stores all the data sent by the detection devices 1 and detects any transmission failures;
- for each detection device 1, it shows the rail displacement in both directions and the rail temperature if the thermometrical feeler is installed;
- for each single rail (left or right) and upon a command by the operator, it sets the instant for completing the constraint release operations;
- stores at the same time the detected, position and temperature for each detection device 1, the system setting the subsequent adjustment operations on these information;
- computes the means (Tm) of the temperature data detected on each rail half-section and, according to the rail section length, computes the whole extensions of each half-section and the quarter subdivision; the computed extensions (ΔL computed) are shown in mm in the diagrams of each quarter.

During the adjustment operations, the remote main processing unit performs in real-time the following operations:
- processes the horizontal extension data detected by each detection device 1, the data values being expressed in millimetres, compares said data with the computed ones, shows in percentage form the detected extensions compared with the theoretical ones to allow a proportionality control (the computations are made by subtracting the value of any fixed point displacements from the detected extension values) and displays with different colours the values beyond the predetermined tolerances.

When the complete extension of each rail half-section is reached, a message is displayed to notify the end of the traction or heating operations.

The whole detection system according to the present invention keeps on acquiring data up to its switching off. The data are then automatically stored, their fast display being allowed through subsequently retrievable menus. If desired, the data file can be saved and archived in a read only format.

Therefore, it should be understood that the system and method for controlling and storing the physical parameters that change during the rail section internal stress adjustment operations described so far in a preferred embodiment brilliantly achieves the intended purposes, allowing to detect, transmit, collect and compute in real-time the physical data required to set the tensions in the long welded rail in a more precise, reliable and quick way with respect to the prior art. The system allows as well a considerable reduction of the data detection, evaluation and computation error possibility due to a less human factor incidence.

Although the system and method for controlling the changes of the rail section physical parameters according to the invention has been disclosed and shown only with reference to a particular embodiment, it will be clear for a person skilled in the art that various changes, variations, replacements and additions of parts with other functionally equivalent components could be made, without departure from the scope of protection defined by the appended claims.

## Claims

1. A system for simultaneously controlling and storing the physical parameters that change during the internal stress adjustment operations in the installation of the so called long welded rail, comprising a remote main processing unit consisting of a computer with a proper interface card, and one or more detection devices (1) adapted to be disposed at predetermined positions on the rails (3) and connected with said *remote* main processing unit, each detection device (1) being adapted to check, during all the release and subsequent stress adjustment stages for said rail (3), all the data related to the *longitudinal movements* of a certain section of said rail (3) with respect to underlying sleepers (5) completely unbound from said rail (3), and to send said data to said remote main processing unit, **characterized in that** each of said detection devices (1) is made of two separate components, a main component (7) which contains the detection elements and is configured to be fastened to at least one of said sleepers (5), and at least a checking component (9) adapted to be fastened to said rail (3), said main component (7) of said detection device (1) being provided with *at least* a mechanical *checking bar (11), said mechanical checking bar (11) being maintained in permanent contact with said at least a checking component (9) through a spring device, said system comprising one or more thermometrical feelers or detecting the temperature in one or more sections of the rail (3), and said* system comprising an electronic card adapted to process the displacement and temperature data and send these data to the remote main processing unit.

2. The system according to claim 1, **characterized in that** the checking bar (11) of the main component (7) is integral with the cursor (17) of an electronic position transducer mounted on the sleeper (5) through a proper fastening element, and it is able to move inside the detection device (1) along a linear slide guide (19).

3. The system according to claim 1, **characterized in that** each checking component (9) is fastened to the rail (3) through a bracket (13) mounted on the flange (15) of said rail (3), and it is disposed in a substantially vertical position.

4. The system according to claim 1, **characterized in that** said one or more thermometrical feelers are disposed in a proper housing (21), which can be connected to each detection device (1).

5. The system according to claim 4, **characterized in that** each detection device (1) is provided with a housing (23) for an electronic card able to process the displacement and temperature data detected by said detection device (1) position transducers and thermometrical feeler respectively.

6. The system according to claim 5, **characterized in that** the electronic card of each detection device (1) comprises a wireless communication device able to send the displacement and temperature data to the remote main processing unit.

7. The system according to claims 1 to 6, **characterized in that** the operation of all the equipments included in each detection device (1) is ensured by a proper battery pack (25).

8. The system according to claim 1, **characterized in that** the position of the mechanical detection devices (1, 9) can be inverted, the detection device (1) connected to the position transducer being fastened to the rail (3) rather than to the sleepers (5) and the checking element (9) being fastened to one of the sleepers (5) rather than to the rail (3).

9. The system according to claim 2, **characterized in that** the mechanical checking elements (9, 11) and the position transducer of each detection device (1) can be replaced with other electronic distance measuring equipments as laser, radar, infrared, ultrasonic, etc.

10. The system according to claim 7, **characterized in that** the electronic card and the battery pack (25) could be disposed in a stand alone box properly connected with the detection device (1).

11. A method for simultaneously controlling and storing the physical parameters that change during the internal stress adjustment operations in the installation of the so called long welded rail, said method *using the* system according to the preceding claims, comprising the following steps:
(a) detecting displacement and temperature data by means of one or more detection devices (1),
(b) processing the data detected by each detection device (1) in real-time,
(c) automatically verifying the expansion proportionality in the different rail sections (3), and the immobility of the fixed points and the displacements with respect to the operative tolerances,
(d) and supplying to the operator the data for intensifying the shaking activities on said rail (3) in order to obtain a true proportional expansion with respect to the imposed expansion and thus the tension homogeneity in each rail section (3).

12. The method according to claim 11, wherein the remote_main processing unit can automatically store the detected data, allowing the subsequent visualization and printing of the tension adjustment main data to certificate the correct execution of all the operations.

## Patentansprüche

1. System zum gleichzeitigen Kontrollieren und Speichern der veränderlichen physikalischen Parameter während Vorgängen zur Regulierung der Eigenspannung von langen geschweißten Schienen anlagen, mit einer Erfassungszentralfernstation, die aus einem eine entsprechende Schnittstellenkarte aufweisenden Computer besteht, sowie mit einem bzw. mehreren Erfassungsterminals (1), die für die Aufstellung an bestimmen Stellen der Schienen (3) und für den Anschluss mit der besagten Erfassungsfernstation geeignet sind, wobei jedes Erfassungsterminal (1), während aller Schritte von Bindungsfreigabe und anschließender Regelung der Schieneneigenspannung geeignet ist, alle die Daten der Längsbewegungen einer bestimmten Schienenstrecke (3) bezüglich darunterliegender völlig aus der Schiene (3) befreiten Schwellen (5) zu erfassen, und diese Daten an die zentrale Fernstation zu übermitteln, **dadurch gekennzeichnet, dass** jedes Erfassungsterminal (1) aus zwei gesonderten Teilen besteht, d.h. einem Hauptbestandteil (7), der die Erfassungselemente enthält und an mindestens eine Schwelle (5) befestigbar ist, sowie mindestens einem an die Schiene (3) fixierbaren Bezugsbestandteil (9), wobei der Hauptbestandteil (7) des Erfassungsterminals (1) mit mindestens einem mechanischen Bezugsstab (11) versehen ist, indem dieser Bezugsstab (11) stets in Berührung mit mindestens einem Bezugsbestandteil (9) mittels einer Federeinrichtung steht, wobei dieses System einem bzw. mehrere Temperaturmessungsfühler für die Temperaturaufnahme an einer bzw. mehreren Schienenstrecken (3) und eine elektronische Karte aufweist, indem diese Karte geeignet ist, um die Bewegungs-und Temperaturdaten zu verarbeiten und an die Zentralfernstation zu übermitteln.

2. System nach Anspruch 1, **dadurch gekennzeichnet, dass** der Bezugsstab (11) des Hauptbestandteils (7) fest an dem Schieberläufer (17) eines durch geeignete Verankerung auf die Schwelle (5) angebauten Stellungsgebers, und innerhalb des Erfassungsterminals (1) entlang an einer Lineargleitschiene (19) bewegbar ist.

3. System nach Anspruch 1, **dadurch gekennzeichnet, dass** jeder Bezugsbestandteil (9) fest an der Schiene (3) durch einen auf dem Schienenfuß (15) aufgebrachten Bügel (13) und in einer etwa senkrechten Stellung angeordnet ist.

4. System nach Anspruch 1, **dadurch gekennzeichnet, dass** je ein geeigneter in einer Sonderaufnahme (21) angeordneter Temperaturmessungsfühler an jedes Erfassungsterminal (1) angeschlossen werden kann.

5. System nach Anspruch 4, **dadurch gekennzeichnet, dass** jedes Erfassungsterminal (1) mit einer Aufnahme (23) für eine elektronische Karte versehen ist, wobei diese Karte die von den Stellungsgebern bzw. den Temperaturmessungsfühlern des Terminals (1) erfassten Bewegungs-und Temperaturdaten verarbeiten kann.

6. System nach Anspruch 5, **dadurch gekennzeichnet, dass** die elektronische Karte jedes Erfassungsterminals (1) ein drahtlose Übertragungseinrichtung aufweist, welche die Bewegungs-und Temperaturdaten an die Zentralfernstation übermitteln kann.

7. System nach Ansprüchen 1-6, **dadurch gekennzeichnet, dass** der Betrieb aller innerhalb jedes Erfassungsterminals (1) vorliegenden Ausrüstungen von einem angemessenen Batterienpaket (25) gewährleistet wird.

8. System nach Anspruch 1, **dadurch gekennzeichnet, dass** die Anordnung der mechanischen Erfassungsbauteilen (1,9) umgestellt werden kann, indem das Erfassungsterminal (1) auf die Schiene (3) statt zu einer der Schwellen (5), und der Bezugsbestandteil (9) auf eine der Schwellen (5) statt zur Schiene (3) befestigt werden kann.

9. System nach Anspruch 2, **dadurch gekennzeichnet, dass** die mechanischen Bezugsteile (9,11) und der Stellunggeber jedes Erfassungsterminals (1) durch anderen elektronische Abstandmesser (laser, rader, infrarot, ultraschall usw.) ersetzt werden können.

10. System nach Anspruch 2, **dadurch gekennzeichnet, dass** die elektronische Karte und das Batterienpaket (25) in einen gesonderten, mit dem Erfassungsterminal (1) zweckmäßigerweise angeschlossenen Behälter angeordnet werden können.

11. Verfahren zum gleichzeitigen Kontrollieren und Speichern der veränderlichen physikalischen Parameter während Vorgängen zur Regulierung der Eigenspannung von langen geschweißten Schienenanlagen, mit der Anwendung des Systems nach den vorhergehenden Ansprüche, mit den folgenden Schritten:
(a) Ermittlung der Bewegungs-und Temperaturdaten durch eine bzw. mehrere Erfassungseinrichtungen (1);
(b) Echtzeit-Verarbeitung der von jeder Erfassungseinrichtung (1) ermittelten Daten,
(c) automatisch kontrollieren die Verhältnismäßigkeit der Dehnung an den verschiedenen Schienenstrecken (3), die Unbewegtheit der Festpunkte und die Abweichungen bezüglich der Betriebstoleranzen, und
(d) Erteilen an einen Bediener die Daten, um die Tätigkeit von Schütteln der Schiene (3) zu steigern und eine wirkliche proportionale Dehnung bezüglich der aufgebrachten Dehnungen, denn die Gleichartigkeit der Eigenspannungen innerhalb jeder Schienenstrecke (3) zu erhalten.

12. Verfahren nach Anspruch 11, wobei die Erfassungszentralfernstation die erhaltenen Daten automatisch speichern kann, indem die Anzeige und der anschließende Druck der wichtigen Daten der Spannungsregelung gestattet wird, um die richtige Arbeitserledigung bescheinigen zu können.

## Revendications

1. Système pour contrôler et enregistrer simultanément des paramètres physiques variables pendant les opérations de réglage des contraintes internes dans une installation des soi-disant rails soudés de grande longueur, comprenant une station centrale à distance de relèvement, formée par un ordinateur avec carte d'interface y relative, et un ou plusieurs terminaux (1) de relèvement aptes à être disposés en points prédéterminés des rails (3) et connectés avec la dite station centrale à distance de relèvement, chaque terminal (1) de relèvement étant apte à relever, pendant toutes les phases de libération des contraintes et par la suite de réglage des tensions du dit rail (3), toutes les données relatives aux mouvements longitudinaux d'un tronçon déterminé du dit rail (3) par rapport aux traverses (5) situées par-dessous, complètement dégagées du dit rail (3), et envoyer ces données à la dite station centrale à distance de relèvement, **caractérisé en ce que** chaque des dits terminaux (1) de relèvement est formé par deux parties séparées, à savoir une composante principale (7) contenant les éléments de relèvement et configurée pour être fixée au moins à une traverse (5), et au moins une composante de contrôle (9), apte à être fixée au dit rail (3), la dite composante principale (7) du dit terminal (1) de relèvement étant munie d'au moins une barre mécanique de contrôle (11), la dite barre mécanique de contrôle étant maintenue en contact permanent avec la dite au moins une composante de contrôle par un dispositif à ressort, le dit système comprenant un ou plusieurs capteurs thermométriques pour relever la température dans un ou plusieurs tronçons du rail (3), le dit système comprenant une carte électronique apte à traiter les données de déplacement et température et envoyer ces données à la station centrale à distance de relèvement.

2. Système selon la revendication 1, **caractérisé en ce que** la barre de contrôle (11) de la composante principale (7) est solidaire avec le curseur (17) d'un transducteur de position électronique monté sur la traverse (5) par un ancrage adéquat et pouvant se déplacer à l'intérieur du terminal (1) de relèvement le long d'une coulisse linéaire (19).

3. Système selon la revendication 1, **caractérisé en ce que** chaque composante de contrôle (9) est solidaire avec le rail (3) moyennant un étrier (13) monté sur le patin (15) du rail (3), et est disposée en position essentiellement verticale.

4. Système selon la revendication 1, **caractérisé en ce que** chaque terminal (1) de relèvement peut être connecté par câble avec une sonde thermométrique appropriée pour relever la température du rail (3), laquelle sera disposée dans un logement approprié (21).

5. Système selon la revendication 1, **caractérisé en ce que** chaque terminal (1) de relèvement est munie d'un logement (23) pour une carte électronique apte pour traiter les données de déplacement et température relevées respectivement par les transducteurs de position et les sondes thermométriques du dit terminal (1) de relèvement.

6. Système selon la revendication 5, **caractérisé en ce que** la carte électronique de chaque terminal (1) de relèvement comprend un dispositif de transmission sans-fils apte pour envoyer les données de déplacement et température à la station centrale à distance de relèvement.

7. Système selon les revendications 1 à 6, **caractérisé en ce que** le fonctionnement de tous les appareillages à l'intérieur de chaque terminal (1) de relèvement est assuré par un bloc (25) approprié des batteries.

8. Système selon la revendication 1, **caractérisé en ce que** la position des composantes mécaniques (1, 9) de relèvement peut être invertie, dont le terminal (1) de relèvement peut être fixé sur le rail (3) au lieu d'une traverse (5) et la composante de contrôle (9) peut être fixée sur une des traverses (5) au lieu du rail (3).

9. Système selon la revendication 2, **caractérisé en ce que** les contrôles mécaniques (9, 11) et le transducteur de position de chaque terminal (1) de relèvement peuvent être remplacés par des autres mesureurs électroniques de distance (laser, radar, infrarouges, ultrasons et semblables).

10. Système selon la revendication 7, **caractérisé en ce que** la carte électronique et le bloc (25) des batteries peuvent être disposés dans un boitier séparé opportunément connecté au terminal (1) de relèvement.

11. Procédé pour contrôler et enregistrer simultanément des paramètres physiques variables pendant les opérations de réglage des contraintes internes dans une installation des soi-disant rails soudés de grande longueur, en utilisant le système selon les revendications précédentes, comprenant les phases suivantes :
(a) relever les données de mouvement et température moyennant un ou plusieurs dispositifs (1) de relèvement ;
(b) traiter en temps réel les données relevées par chaque dispositif (1) de relèvement ;
(c) vérifier automatiquement la proportionnalité des allongements dans les tronçons divers du rail(3), l'immobilité des points fixes et la déviation par rapport aux tolérances de fonctionnement ; et
(d) fournir à un opérateur les données pour intensifier l'opération d'ébranlement du rail (3) pour obtenir un allongement effectif proportionnel par rapport aux allongements imposés et conséquemment l'homogénéité des contraintes internes dans chaque tronçon du rail (3).

12. Procédé selon la revendication 11, dont la station centrale à distance de relèvement peut stocker automatiquement les données reçues, en permettant la visualisation et l'impression successive des données saillantes de réglage des contraintes, pour certifier l'exécution correcte des travaux.
